# EUROPEAN PATENT SPECIFICATION

(11) **EP 1 155 251 B1**
(45) Date of publication and mention of the grant of the patent: **07.04.2004**
(21) Application number: 00906355.3
(22) Date of filing: 18.02.2000
(51) Int. Cl.: F16K 31/06, F16K 31/08

(54) **SOLENOID VALVE**
MAGNETVENTIL
ELECTROVANNE

(30) Priority: 19.02.1999 EP 99102740
(43) Date of publication of application: 21.11.2001
(73) Proprietor: Ranco Incorporated of Delaware, Wilmington, Delaware 19801-1612 (US)
(72) Inventor: CERIZZA, Giovanni, I-26900 Lodi (IT); BALLOCCHI, Paolo, I-23880 Casatenovo (IT)
(74) Representative: HOFFMANN - EITLE
(86) International application number: PCT/EP2000/001365
(87) International publication number: WO 2000/049320

(56) References cited:
- EP-A- 0 525 529
- DE-A- 3 718 490
- DE-A- 4 117 958
- US-A- 3 379 214
- US-A- 4 546 338
- US-A- 4 577 832
- US-A- 4 647 009
- US-A- 5 226 627
- US-A- 5 388 614
- US-A- 5 394 131

## Description

### FIELD OF THE INVENTION

The present invention relates to a solenoid valve to control, e.g., the supply of the refrigerant fluid in multicompartment refrigerators having , a fridge and a freezer and using only a single compressor.

### TECHNICAL BACKGROUND

Refrigerators either for household or commercial applications are very often designed to provide on the same appliance a freezer and a refrigerator compartment. This is obtained either by employing two independent refrigeration circuits with two compressors or a single refrigeration circuit with one compressor working a in conjunction with a solenoid valve having the function to divert the refrigerant to the compartment requiring cooling. To save space, limit the energy consumption and decrease the appliance cost, the single compressor solution with a diverting valve is the preferred solution though, as explained further on, it has some limitation with respect to a system with two compressors.

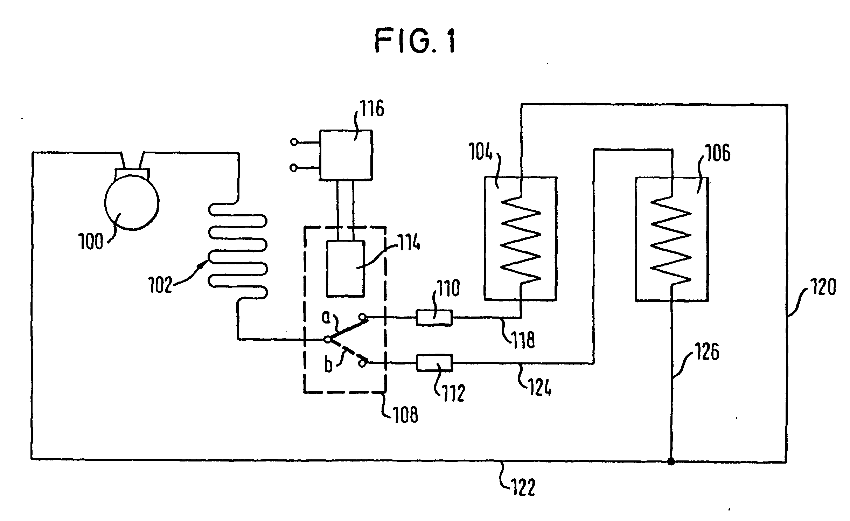

Fig. 1 describes a typical refrigeration system consisting of a single compressor 100, a condenser 102, a first evaporator 104, for instance placed in the freezer compartment, and a second evaporator 106, for instance placed in the refrigerator compartment.

As shown in Fig. 1, a solenoid valve 108 diverts the refrigerant fluid from the condenser 102 output to either the freezer evaporator 104 or the refrigerator evaporator 106 via the capillary restrictions 110 or 112, respectively. The solenoid valve 108 is actuated via an actuating element 114 such as a magnetic coil and the current supply to the coil is controlled by a control unit 116.

The first operative position of the valve 108 is in a first working position indicated in Fig. 1 by a solid line (a) where the output of the condenser 102 is connected to the first evaporator 104. A further dashed line (b) in Fig. 1 relates to a second working position where the output of the condenser 102 is connected to the second evaporator 106.

Fig. 1 represents an application where the two evaporators 104, 106 are fed independently with refrigerant in dependence of the solenoid valve working position.

As shown in Fig. 1, in the first working position the refrigerant fluid expands in the first evaporator 104 via conduits 110, 118, and returns to the compressor 100 via paths 120, 122. In the second working position the fluid expands in the second evaporator 106 via conduits 112, 124 and returns to the compressor via paths 126, 122.

An alternative application not shown explicitly in Fig. 1 is one where both evaporators 104 and 106 are fed with refrigerant in cascade in the first working position. Here, both evaporators may not be operated independently.

However, the refrigeration system shown in Fig. 1 has the disadvantage of not allowing for the simultaneous supply of refrigerant to both the first and second evaporator 104 and 106. The need for simultaneous cooling of both freezer and refrigerator compartments and thus the simultaneous supply of refrigerant is often required by applications. This represents a limitation to the compressor system.

In US-A-4,577,832 there is described a rotary driving apparatus having a tubular casing in which a stator has a pair of circumferentially spaced pole portions and a rotor having a pair of radially spaced pole portions. One of the rotor and the stator is made of a permanent magnet. The apparatus has a coil for magnetizing the other one of the rotor and the stator. The rotor extends out of the inner periphery of the stator so that rotation of a limited angle of the rotor is allowed, the direction of which is changed in accordance with the direction of the electric current applied to the coil.

In US-A-3,379,214 there is described a valve assembly including a body having an inlet and an outlet and a flow passageway including a valve chamber therebetween. A single electromagnet is supported on the body, and a valve element of the valve chamber is movable between a first and second flow control position for controlling fluid flow. Further, a magnetic circuit includes a permanent magnet providing a permanent magnetic flux, and a reversible polarizable semipermanent magnet providing a residual flux along the same direction as the electromagnet flux of sufficient magnitude and duration for latching the valve member.

Still further, in DE 41 17 958 A1 there is magnetic valve having a valve chamber and a valve piston being movable between two stop elements to open and/or close at least a valve opening.

Still further, in US-A-5,226,627 there is described a magnetic valve having a valve chamber with at least one valve opening, and a valve member adapted to close and release the at least one opening in its abutment position. The magnetic valve further comprises an actuating element displaceable between two end positions in the valve chamber and actuating the valve member as well as a permanent magnet associated with the actuating element and holding the actuating element in the end positions. The permanent magnet is magnetized along a direction of displacement of the actuating element and has two ends extending transversely to the displacement direction provided with pole pieces.

Still further, in EP 0 525 529 A1 there is described a multiway valve, in particular for refrigerating circuits, for controlling the flow of gases. The multiway valve makes use of a PTC element as the active element, as well as a magnet along with a plate of thermoferrite material to actuate the shutting member in opposition to the biasing action of a return spring.

### SUMMARY OF THE INVENTION

To obviate the limitations described above, the object of the invention is to provide a solenoid valve allowing to feed different evaporators either individually or simultaneously.

According to the present invention, this object is achieved through a solenoid valve having the features of claim 1.

Therefore, according to the present invention a multi-state solenoid valve is implemented using a core element having a coil for magnetisation of the core element. Further, a member with at least one permanent magnet defining a first and second magnetic pole region is arranged with respect to the core element such that a relative movement between a member with the permanent magnet and the core element is possible.

In addition, the solenoid valve comprises stopper means for limiting the relative movement of the core element and the member with the at least one permanent magnet between a first and a second limit stop position. According to the present invention different working positions in the solenoid valve are maintained stable without further supply of energy to the coil in the core element which - in other words - is only energized to move the element with the at one least permanent magnet.

No energy supply is necessary to maintain this member in one of a plurality of working positions. According to the present invention this is achieved in that in each of the different working positions the magnetic field flux of the permanent magnet closes over the core element which is therefore maintained in a stable state.

Further, the stopper means limits the relative movement of the core element and the member between a first and second limit stop position. In each stop position the member having at least one permanent magnet is moved slightly out of the related equilibrium position where its magnetic field flux fully closes over the core element. Therefore, there is the tendency of the member having the at least one permanent magnet to move into this equilibrium position. However, as the member with the at least one permanent magnet abuts the stopper means there is generated a force or torque at either of the first and second limit stop position.

Operatively, the member with the permanent magnet is moved relative to the core element into the first limit stop position through supply of current pulse with a first appropriate polarity to the coil of the core element. Further, the member with the permanent magnet is moved operatively into the second limit stop position through supply of a current impulse with a polarity opposite to the polarity assigned for the first limit stop position. In case the member with the permanent magnet is to be moved into a third position lying between the first and the second limit stop position, this is achieved through supply of a sequence of impulses with alternating polarities to the coil.

Therefore, in other words, the various working positions generally are selected by energizing the coil with short positive or negative pulses generated in a control unit to bring the valve element into the first to third working position. In particular, the third working position is obtained through supply of a short sequence of alternating pulses of calibrated energy to the coil. Here, the energy amount to achieve the third working position is determined as a function of the inertia and self-resonance characteristics of the solenoid valve.

According to a preferred embodiment of the present invention the member with the permanent magnet is provided with pole extensions in contact to the poles of the permanent magnet to achieve optimized interaction between the permanent magnet and the core element.

According to yet another preferred embodiment of the present invention, the solenoid valve uses a rotor as member with a permanent magnet, and core elements with two separate pole pieces face each other to form a rotor space for accommodation of the rotor. Preferably, the pole extensions in contact with the poles of the permanent magnet extends beyond the permanent magnet in a radial direction of the rotor.

This preferred embodiment of the invention allows to apply the basic principle outlined above to a rotary arrangement of a solenoid valve. In particular, the geometry of the pole pieces and the pole extensions is important to determine the direction and the amount of torque generated on the rotor by the pole pieces under stationary conditions and in case the coil is energized.

Further, typically integral to the cylindrical rotor there is provided a bar-shaped shaft for rotation with the rotor such that the shaft extends into the valve chamber and has a sealing element for closing at least one of the outlets in the valve chamber in compliance with the position of the rotor.

A characteristic of this preferred embodiment implementing a rotary type solenoid valve is the low friction during movement and therefore the reduction of the possibility of "sticking" or, in other words, the possibility of not to move to the desired working position due to excessive friction.

According to yet another preferred embodiment of the present invention the member is implemented as sliding element adapted to carry out a reciprocal linear movement relative to the core element. Here, pole extensions of the sliding element comprise, e.g., a first U-shaped part and a second U-shaped part contained in the first U-shaped part and the U-shaped parts being arranged in contact with related pole faces of the permanent magnet.

Therefore, this further preferred embodiment of the present invention allows for a linear instead of a rotating movement within the solenoid valve.

According to yet another preferred embodiment, irrespective of rotating or linear movement of the element with the permanent magnet, this permanent magnet element is a sintered part made from Ne-Fe-B (Neodimium-Ferrous-Boron). Preferably, one could combine into only a single part the function of the permanent magnet, the pole extension, the rotor and the shaft attached to the rotor enabling the reduction of the number of parts from, e.g., four to one. This may be achieved using plastic material charged with ferrite being subsequently magnetized. With this type of combined functionality attention must be given to the chemical compatibility of the supply, e.g., refrigerant and/or lubrication fluids used in the system to avoid their pollution and/or the degradation of the valve plastic material.

According to yet another preferred embodiment, suitable materials for the single part having a plurality of functions are, e.g., plastics of poly-oxy-methylene (POM) or poly-aryl-etherketone material families.

In the following, preferred embodiments not to be interpreted as restricting the scope of the present invention will be described with reference to the enclosed drawing in which:
- Fig. 1: shows a schematic diagram of a single compressor refrigerator system having two evaporators which are supplied independently from each other;
- Fig. 2: shows the basic principle underlying the different embodiments of the present invention;
- Fig. 3: shows a basic construction for a solenoid valve of the rotary type according to a first preferred embodiment of the present invention;
- Fig. 4: shows a first stable working position in the solenoid valve of the rotary type shown in Fig. 3;
- Fig. 5: shows a second stable working position in the solenoid valve of the rotary type shown in Fig. 3;
- Fig. 6: shows a third stable working position in the solenoid valve of the rotary type shown in Fig. 3;
- Fig. 7: shows the basic structure of a solenoid valve of the linear movement type according to a second preferred embodiment and further a first stable working position of this solenoid valve of the linear movement type;
- Fig. 8: shows a second stable working position of the solenoid valve of the linear movement type shown in Fig. 7;
- Fig. 9: shows a third stable working position of the solenoid valve of the linear movement type shown in Fig. 7;
- Fig. 10: shows a first circuit to provide the alternating pulse of calibrated energy for the activation of the solenoid valves according to the present invention;
- Fig. 11: shows a second control circuit for the supply of alternating currents for the activation of the solenoid valves according to the present invention; and
- Fig. 12: shows a third control circuit for the supply of alternating pulses for the activation of the solenoid valves according to the present invention.

### BASIC PRINCIPLE UNDERLYING THE PRESENT INVENTION

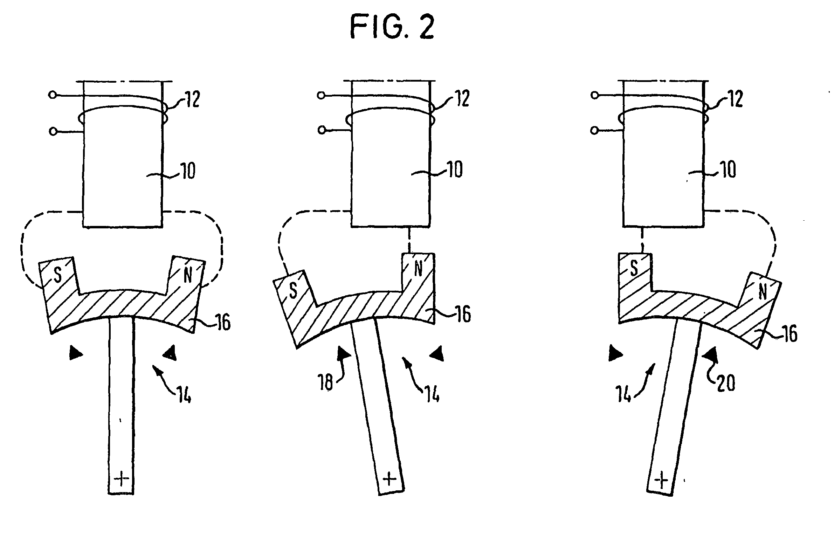

Fig. 2 shows the basic principle underlying the solenoid valves according to the different embodiments of the present invention; it should be noted that while Fig. 2 relates to a rotary type of solenoid valve the basic principle described with respect thereto may easily also be adapted to a solenoid valve of the linear movement type, as will be outlined herein further below.

As shown in Fig. 2, the approach underlying the present invention relies on three stable positions or equilibrium states of an arrangement comprising at least a core element 10 having a coil 12 and a member 14 having a permanent magnet 16. The permanent magnet defines a first and second magnetic pole region N and S, respectively, of the member 14. In addition, the member 14 and the core element 10 are arranged such that a relative movement between the member 14 and the core element 10 is possible.

As shown in Fig. 2, this arrangement allows for three stable working positions. In the first position shown on the left side the magnetic field flux of the permanent magnet 16 is closed over the lower part of the core element 10 while the pole regions N and S of the permanent magnet are arranged symmetrically with respect to the center axis of the core element.

Further, in the second working position shown in the middle part of Fig. 2 the magnetic field flux of the permanent magnet 16 is closed such that it is again closed over the core element, however, with a first pole region, e.g., the N pole tending to align with the center axis of the core element 10.

Still further, in the third stable working position shown in the right part of Fig. 2, the magnetic field flux is also closed over the core element 10, however, this time with the other magnetic pole piece, e.g., the S pole tending to align with the center axis of the core element.

It is important to note that all these three working positions are maintained without continuous supply of energy to the coil 12. The reason for the coil 12 is to achieve a transition between the different working positions. Heretofore, it is necessary to temporarily excite the coil so as to achieve a magnetization of the core element 10 which is not maintained permanently.

One option would be, e.g., for a transition from the leftmost working position to the middle working position that the pole piece of the core element 10 is temporarily changed to the S pole so that the N magnetic pole region of the permanent magnet 16 is attracted.

Equivalently, to achieve a transition between the leftmost and the rightmost working position shown in Fig. 2, the lower part of the core element 10 would temporarily be magnetized into a magnetic N pole so as to attract the magnetic pole region S of the permanent magnet 16.

Still further, it should be mentioned that the three different working positions shown in Fig. 2 have a natural tendency to achieve a stable position in which no further forces or torques are exerted onto the member with the permanent magnet.

Nevertheless, for the applications outlined above with respect to the background art of the present invention it might be necessary that in particular the middle and rightmost working position of the member with the permanent magnet is not only maintained in a stable state but also exerts a certain force or torque onto other construction elements of the solenoid valve.

For this reason, there may be provided a left or first stopper 18 and a right or second stopper 20. These stoppers 18, 20 allow to restrict the movement of the member 14 with the permanent magnet such that in the middle and rightmost working position the member 14 is not moved into the actual equilibrium state but is stopped shortly before reaching this state.

Also, there will remain a tendency of the member 14 to move further into the equilibrium state shown in the middle and rightmost position in Fig. 2. This tendency to move further will result into a torque that is executed through the member 14 onto those construction elements being connected thereto.

### DESCRIPTION OF PREFERRED EMBODIMENTS

In the following, the basic principle outlined with respect to Fig. 2 will be described in more detail for a solenoid valve of the rotor type and the linear movement type. Throughout the following description those elements being related to the ones described with respect to Fig. 2 will be denoted using the same reference numerals for ease of explanation.

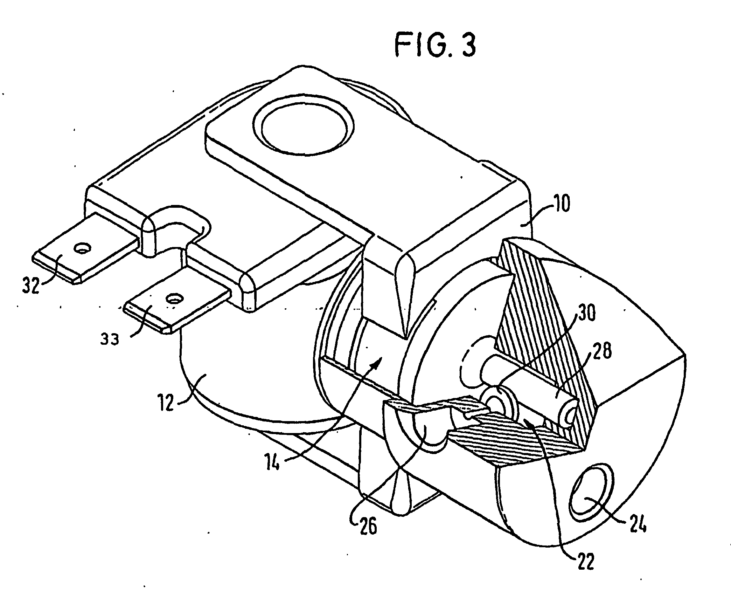

As shown in Fig. 3, the solenoid valve of the rotor type comprises a core element 10 and the coil 12 for excitation of the core element 10. Further, there is provided a valve chamber 22 into which fluid is supplied via an inlet 24. The fluid may then leave the valve chamber 22 via a first outlet 26 and a second valve outlet (not shown explicitly in Fig. 3).

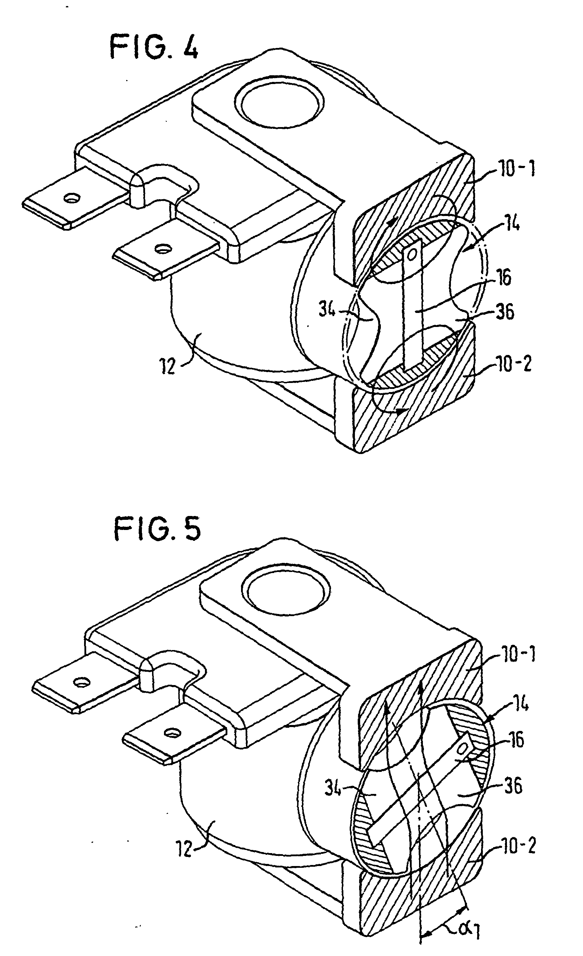

As also shown in Fig. 3, the member 14 with the permanent magnet 16 (visible in Fig. 4) is connected via a shaft 28 which has a sealing element 30 attached thereto for closing the outlets of the valve chamber in accordance with the working position of the rotor 14.

Finally, to change the different working positions, the core element is excited through the coil 12 through supply of current thereto via terminals 32, 33, respectively.

Figs. 4 to 5 show further details of the solenoid valve of the rotor type with a cross-sectional view through the solenoid valve. Further, Figs. 4 to 6 relate to the different working positions of the member 14 with the permanent magnet 16.

As shown in Figs. 4 to 6 for the solenoid valve of the rotor type the core element 10 has a specific structure with two separate pole pieces facing each other to form a rotor space therebetween to accommodate the member 14 with the permanent magnet.

Here, the member 14 is a rotor comprising the permanent magnet 16. Further, the rotor 14 comprises pole extensions 34, 36 in contact with the poles of the permanent magnet 16 to achieve optimized interaction between the permanent magnet 16 and the core element 10.

The core element 10 has two separate pole pieces 10-1, 10-2 facing each other to form a rotor space therebetween to accommodate the rotor. Also, the pole extensions 34, 36 extend beyond the permanent magnet and have two concave recesses that are diametrically opposed. The form of the recesses and the pole extensions is chosen such that the solenoid valve is optimized with respect to certain operation conditions, e.g., the torque that should be exerted on the sealing element to close either of the chamber outlets.

Operatively, the solenoid valve of the rotor type having the structure shown in Fig. 3 has three stable working positions shown in the Figs. 4 to 6. In particular, each of the working positions shown in Figs. 4 to 6 corresponds to the leftmost, middle, and rightmost working position shown in Fig. 2.

However, while in Fig. 2 the basic principle of the present invention has been explained with the core element having only one pole according to the solenoid valve of the rotor type there are provided two pole pieces to increase the amount of torque that may be exerted through the member with the permanent magnet.

As already outlined above with respect to Fig. 2, the different working positions shown in Figs. 4 to 6 differ in the way the magnetic field flux concatenates in the magnetic circuit. To better identify the various working positions a black dot has been added to one end of the permanent magnet 16.

The first working position is related to the leftmost working position shown in Fig. 2 where the magnetic flux of the permanent magnet 16 concatenates over the single poles of the core element, i.e. via 10-1 and 10-2.

Further, according to the working position shown in Fig. 5, the member 14 has its clockwise rotation limited through the sealing element 30 abutting against one of the valve chamber outlets shown in Fig. 3. With the coil not energized the flux of the permanent magnet 16 flows from the lower to the upper side as shown by the arrows in Fig. 5, i.e. in the direction south/north.

Because the rotor is forced by the sealing element 30 to stop at an angle α1 with respect to the vertical axis, the magnetic flux is somewhat distorted from the equilibrium point which will correspond to magnetic flux lines running along a straight line from the north to south.

This is a deliberate expedient to generate a clockwise torque to ensure that the sealing element 30 maintains the related outlet close with a given amount of force. Further, in case the coil is energized, e.g., by a current generating a upper pole piece with south polarity and a lower pole piece with north polarity, an even stronger clockwise torque may be generated maintaining the member 14 in the position as shown in Fig. 5.

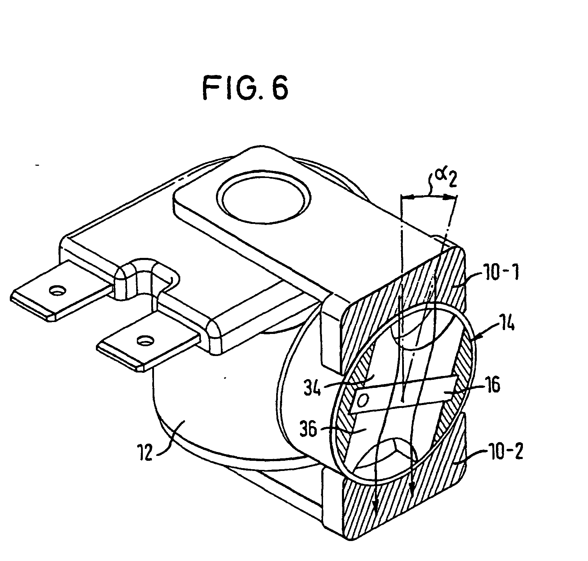

Fig. 6 shows the situation corresponding to the middle working position shown in Fig. 2 with the only difference that here the torque is generated in a counter-clockwise direction to close the other of the outlets of the valve chamber shown in Fig. 3.

By inverting the current polarity in the coil 12, the upper and lower pole pieces of the core element 10 will also invert their magnetic polarity subjecting the element with the permanent magnet to a clockwise or counter-clockwise rotation due to the attractive/repulsive effect that the pole pieces 10-1, 10-2 exert on the pole extensions 34, 36.

In consequence, the rotor 14 assumes the position illustrated either in Figs. 5 and 6 at which point the coil energization may be terminated. In both positions the sealing element 30 rests against the valve outlets to stop at an angle of either α1 or α2 relative to the vertical axis. In both positions a force of the sealing element 30 against each outlet of the valve chamber is achieved by deliberately keeping the flow of the magnetic flux lines distorted to generate a clockwise or counter-clockwise torque onto the sealing element.

As shown in Fig. 4 and already outlined above, the rotor 14 may also assume a third working position corresponding to the leftmost position shown in Fig. 2 that lies between those shown in Figs. 4 and 6. In this middle working position the permanent magnet 16 is substantially oriented vertically with the magnetic flux line concatenating around adjacent pole pieces 10-1, 10-2. In this working position both valve outlets are open allowing the fluid to be supplied into the valve chamber and then to flow out via both valve outlets at the same time.

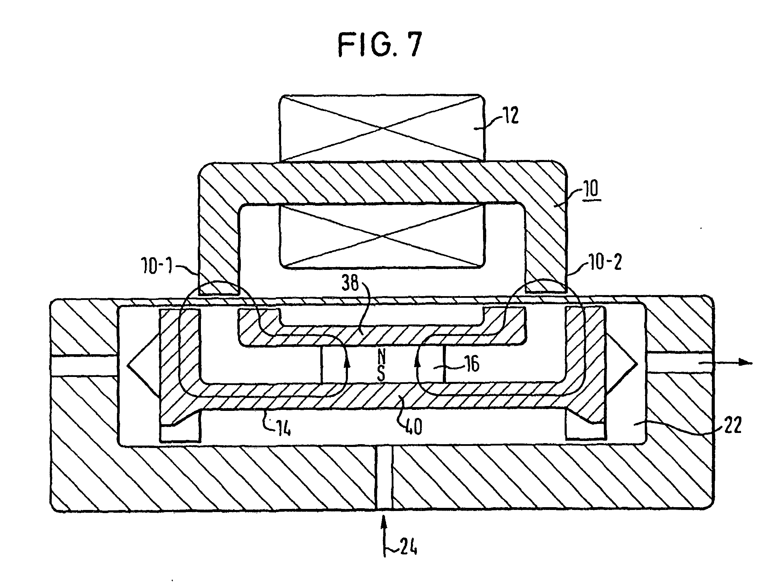

In the following, a solenoid valve according to the linear movement type and second embodiment to the present invention will be explained with respect to Figs. 7 to 9. In these Figs. 7 to 9, functional units having the same function as outlined above are denoted using the same reference numerals.

As shown in Fig. 7, the valve element 14 is a sliding element adapted to carry out the reciprocal linear movement relative to the core element 10 in the valve chamber 22. For the solenoid valve of the linear movement type the pole extension of the sliding element comprises a first U-shaped part 38 and a second U-shaped part 40 protruding outside the first U-shaped part 38. The U-shaped parts 38, 40 are in contact with the pole faces of the permanent magnet 16. The core element 10 comprises a U-shaped yoke 10 carrying the coil 12 and the end of the U-shaped yoke face the end of U-shaped parts 38, 40 of the member with the permanent magnet.

As shown in Fig. 7, in the middle position of the solenoid valve the magnetic flux generated through the permanent magnet is guided to the pole piece of the yoke 10 via the U-shaped parts 38, 40, respectively, and closes via the single pole pieces 10-1, 10-2 of the yoke without supply of energy to the coil 12.

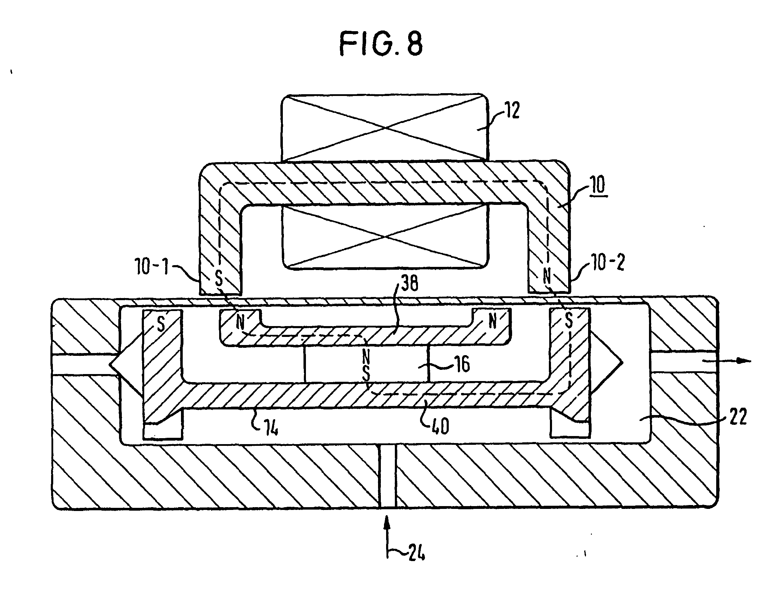

As shown in Fig. 8, to bring the solenoid valve and the valve element comprised therein into the position with closed left outlet of the valve chamber 22, the yoke is magnetized such that the pole piece 10-1 has, e.g., S-polarity and the pole piece 10-2 has N-polarity. Therefore, at the left side there is exerted an attraction force onto the upper U-shaped part 38 and a repulsion force onto the lower U-shaped part 40. Accordingly, at the right side there is exerted a repulsion force between the pole piece 10-1 of the yoke 10 and the related upper U-shaped part 38 and further an attraction force to the lower U-shaped part 40. Once the valve element is moved into a position where the left outlet is closed, no further energy will be supplied to the coil 12 and the magnetic flux will close along the dashed line shown in Fig. 8 so as to maintain this position as stable working position.

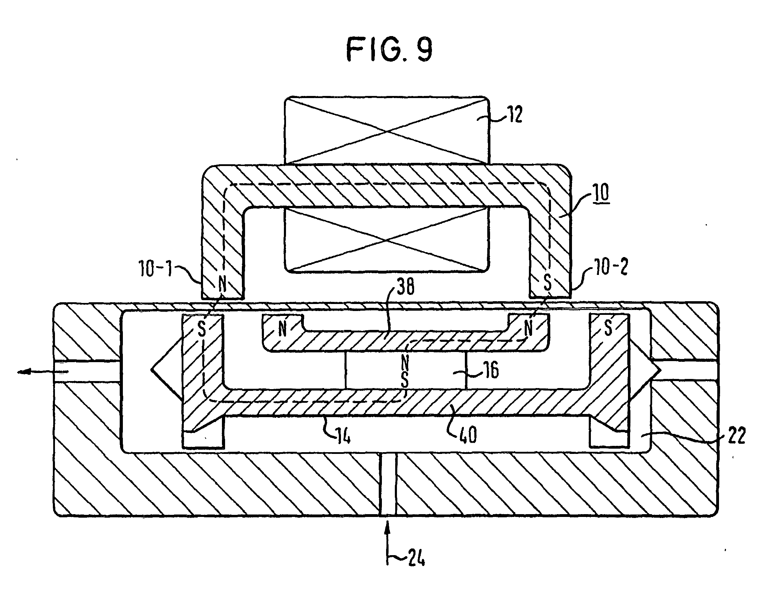

The same principles as outlined with respect to Fig. 8 apply to the Fig. 9 being related to the closed right outlet of the valve chamber 22. The only difference is that here the pole pieces 10-1 and 10-2 have reversed magnetic polarities for movement of the member 14 to the righthand side.

Again, once the right valve outlet is closed, the magnetic field flux generated by the permanent magnet 16 closes along the dashed line shown in Fig. 9 so as to maintain the working position without further supply of the energy to the coil 12.

In the following, there will be explained different approaches to control the supply of pulses to the coil 12 for a transition of the member 14 between the different working positions, both for the solenoid valve of the rotor type and the linear movement type.

An alternate current pulse is sent to the coil 12 to bring the member 14 with the permanent magnet 16 into the middle working position according to the lefthand side of Fig. 2 starting at one of these stable positions shown in the middle part and the righthand part of Fig. 2. The energy of the alternate pulse is calibrated such that it is strong enough to move the member 14 away from one of its stable positions shown in the middle and righthand side of Fig. 2 (or equivalently, in Fig. 5, 6 and Fig. 8, 9, respectively) but weak enough to exclude a full travel from one of the left or right working positions and vice versa. That means, the energy will be weak enough to allow an osciallation around the middle position at which point the supply of alternating pulses is terminated with the member 14 stabilizing in the middle position shown in Figs. 4 and 7.

Further, a duration of the power and energy of the alternating pulses is a function of the inertia of the member 14, i.e. the rotor or the sliding element and also of the self-resonance of the solenoid valve. Because the rotor and the sliding element have the tendency to stabilize at the middle working position the parameters of the alternate pulses allow for fairly large tolerances. Another additional position stabilizing factor is the dynamic effect of the fluid flowing in the middle position simultaneously through both outlets acting as a damper to quench residual oscillations if still present.

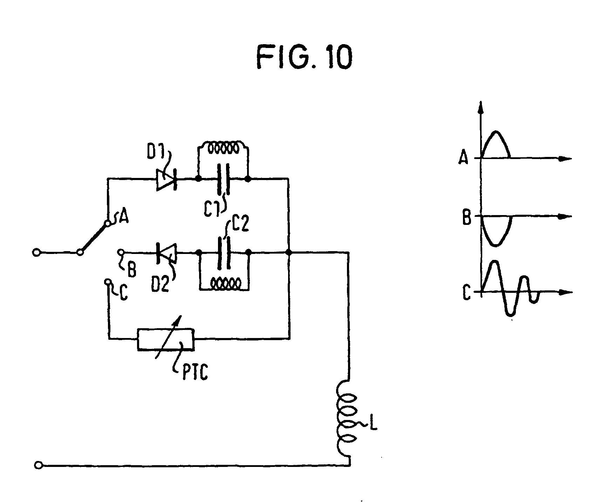

Examples of calibrated energy alternate pulses and a related control circuit for their generation will be explained with respect to Figs. 10 to 12.

Fig. 10 shows a control circuit adapted to the provision of a conventional selector that allows to achieve progressively decreasing voltage or current pulses in full wave. In position A, a single positive pulse is guided over the diode D1 and goes through the capacitor C1 and further current pulses are precluded as the capacitor C1 is loaded. Further, in position B, a single negative pulse may go over diode D2 and then through the capacitor C2. Again, further current pulses are precluded as the capacitor C2 is loaded. Finally, in position C, alternate current pulses are sent to energize the coil. The damping of the amplitudes of the alternate current pulses is achieved through a PTC thermistor heating up and reducing the current to a negligible value after a short time. This results_in a progressively reduced tendency to oscillate around the middle position.

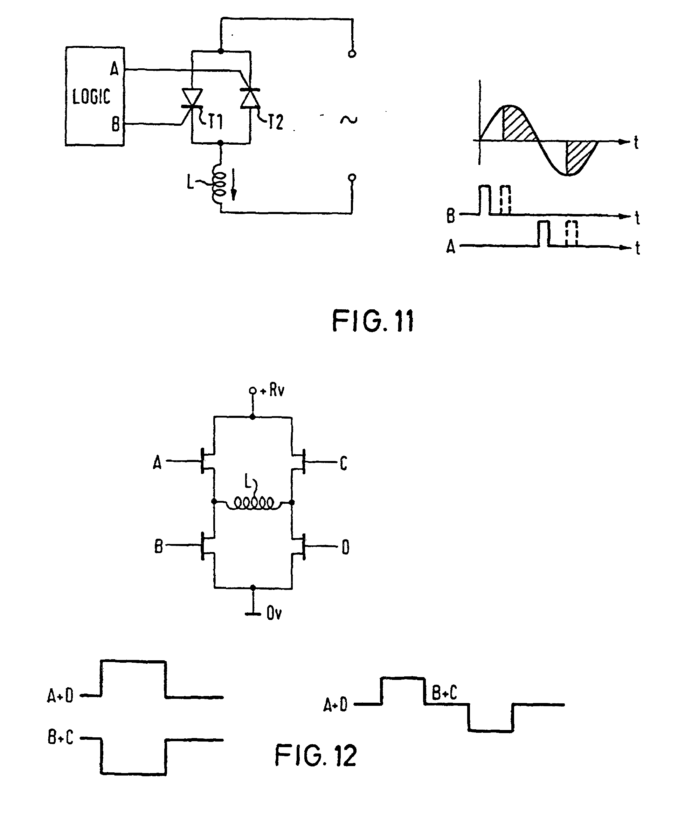

Another option shown in Fig. 11 relates to an electronic controller wherein a coil L is driven with alternate current via thyristors T1 and T2. According to the position A, a single positive semi-wave is triggered by the control unit. In position B, a single negative semi-wave is triggered by a control unit. In position C, alternate split semi-waves are sent by triggering the thyristors T1, T2 in sequence such that the energy is calibrated through selection of the timing at which the thyristors T1, T2 are triggered.

Another option for the electronic control is shown in Fig. 12 and relates to a coil L driven with direct current via a field effect transistor FET bridge. In position A, a positive pulse is generated by triggering the field effect transistors A and D. Here, the pulse length is selectively determined through the logic. Also, in position B, a negative pulse is generated by triggering the field effect transistors B and C. Again, the pulse length is selectively determined through the logic. Finally, in position C, alternative positive/negative pulses are triggered in sequence. Again, the pulse length, frequency and duration is determined by the logic so as to send a calibrated amount of energy.

Irrespective of the various embodiments outlined above, the permanent magnet may be a sintered part made, e.g, from Ne-Fe-B (Neodimium-Ferrous-Boron) or a single plastic part charged with ferrite combining the functions of the permanent magnet and associate magnetic pole extensions. Ferrite-charged materials known for their chemical stability are, e.g., plastics of the poly-oxy-methylene (POM) or poly-aryl-etherketone families.

Also, irrespective of the various embodiments outlined above, the operation of the solenoid valve is effected by energizing the coil with short pulses of current whose positive, negative, alternative nature defines the position of the valve element once the coil is de-energized.

## Claims

1. Solenoid valve, comprising:
a core element (10) having a coil (12) for magnetising said core element (10); and
a member (14) having at least one permanent magnet (16) for defining a first and a second magnetic pole region of said member (14);
said member (14) and said core element (10) being arranged such that a relative movement between said member (14) and said core element (10) is possible;
stopper means (18, 20) for limiting the relative movement of said core element (10) and said member between a first and a second limit stop position;
said stopper means (18, 20) being arranged such that
- in said first limit stop position (L) a pole region of said core element (10) is located in said first magnetic pole region of said member and said member is urged towards said stopper means (18) for maintaining said first limit stop position by the magnetic flux of said permanent magnet (16), and
- in said second limit stop position (R) said pole region of said core element (10) is located in said second magnetic pole region of said member (14) and said member is urged towards said stopper means (20) for maintaining said second stopper position by the magnetic flux of said permanent magnet (16);
**characterised in that**
- said core element (10) is a single core element excited by a single coil; and
- said core element (10) and said member (14) being arranged such that there exists a third relative position (M) of said core element (10) and said member (14), in which position
- said pole region of said core element (10) is located partially in said first magnetic pole region of said member (14) and partially in said second magnetic pole region of said member (14) such that said third relative position is stabilized **in that** the magnetic flux of said permanent magnet (16) is closed over the core element.

2. Solenoid valve according to claim 1, **characterized in that** it further comprises:
a valve chamber (22) provided with an inlet (24) and a plurality of outlets (26); and
a valve element (28, 30) movably located in said valve chamber (22), for selectively coupling said inlet (24) with at least one of said outlets (26); and
means (28) for actuating said valve element (28, 30) by means of said relative movement of said core element (10) and said member (14).

3. Solenoid valve according to claim 2, **characterized in that** the member (14) is further provided with pole extension (34, 36) in contact: with the poles of said permanent magnet (16) to achieve optimized interaction between the permanent magnet (16) and the core element (10).

4. Solenoid valve according to one of the claims 1 to 3, **characterized in that** the member (14) is a rotor.

5. Solenoid valve according to claim 4, **characterized in that** said core element (10) has two separate pole pieces (10-1, 10-2) facing each other to form a rotor space therebetween to accommodate the rotor.

6. Solenoid valve according to claim 5, **characterized in that** said pole extensions (34, 36) in contact with said poles of said permanent magnet (14) extend beyond the permanent magnet (16) in a radial direction of the rotor.

7. Solenoid valve according to one of the claims 4 to 6, **characterized in that** said valve element includes a shaft (28) attached to the rotor (14) for rotation with the rotor, said shaft extending into the valve chamber (22), and having a sealing element (30) for closing at least one of said outlets of said valve chamber (22) in accordance with the position of said rotor.

8. Solenoid valve according to claim 7, **characterized in that** said sealing element (30) and said valve chamber (22) are arranged such that the movement of said rotor is limited between said first and said second limit stop position by means of said sealing element (30) abutting against respective outlets (26) of said valve chamber (22), said sealing element (30) thus constituting said stopper means (18, 20).

9. Solenoid valve according to one of the claims 1 to 3, **characterized in that** said member (14) is a sliding element adapted to carry out a reciprocal linear movement relative to said core element (10).

10. Solenoid valve according to claim 9 dependent on claim 3, **characterized in that** said pole extensions of said sliding element (14) comprise a first U-shaped part (38) and a second U-shaped part (40) accommodated within said first U-shaped part, said U-shaped parts being arranged in contact with respective pole faces of said permanent magnet (16).

11. Solenoid valve according to claim 10, **characterized in that** said core element (10) comprises a U-shaped yoke carrying the coil (12), the ends of said U-shaped yoke facing the ends of said U-shaped pole extensions of said member.

12. Solenoid valve according to one of the claims 1 to 11, **characterized in that** the permanent magnet (16) is formed of metal ceramic ferrite.

13. Solenoid valve according to one of the claims 1 to 11, **characterized in that** the member (16) is formed of polyoxy-methilene (POM).

14. Solenoid valve according to one of the claims 1 to 11, **characterized in that** the member (16) is formed of polyaryletherketone (PEKEKK).

15. Method of operating a solenoid valve according to any one of the preceding claims, comprising the steps:
a) moving the member (14) relative to the single core element (10) into said first limit stop position (L) through supply of a current impulse with a first polarity to the single coil (12);
b) moving the member (14) relative to the single core element (10) into said second limit stop position (R) through supply of a current impulse with a polarity opposite to said first polarity to said single coil (12); and
c) moving said member (14) relative to said single core element (10) into said third position between said first and said second limit stop position through supply of a sequence of impulses with alternating polarity and calibrated amount of energy to said single coil (12).

16. Method of operating a solenoid valve according to claim 15, **characterized in that** the supply of a sequence of impulses with alternating polarity and calibrated amount of energy is achieved via a PTC-thermistor.

## Patentansprüche

1. Solenoidventil, enthaltend:
eine Kernelement (10) mit einer Spule (12) zum Magnetisieren des Kernelements (10); und
ein Element (14) mit zumindest einem Permanentmagneten (16) zum Definieren einer ersten und zweiten Magnetpolregion in dem Element (14),
wobei das Element (14) und das Kernelement (10) so angeordnet sind, dass eine Relativbewegung zwischen dem Element (14) und dem Kernelement (10) möglich ist;
eine Stoppervorrichtung (18, 20) zum Begrenzen der Relativbewegung des Kernelements (10) und des Elements zwischen einer ersten und einer zweite Grenzstoppposition;
wobei die Stoppvorrichtung (18, 20) so ausgebildet ist, dass
- in der ersten Grenzstoppposition (L) ein Polgebiet des Kernelements in dem ersten Magnetpolgebiet des Elements angeordnet ist und das Element zu der Stoppervorrichtung (18) zum Beibehalten der ersten Grenzstoppposition durch den Magnetfluss des Permanentmagneten (16) gedrängt wird, und
- in der zweiten Grenzstoppposition (R) das Polgebiet des Kernelements (10) in dem zweiten Magnetpolgebiet des Elements (14) angeordnet ist und das Element zu der Stoppervorrichtung (20) zum Beibehalten der zweiten Stopperposition durch den Magnetfluss des Permanentmagneten (16) gedrängt wird;
**dadurch gekennzeichnet, dass**
- das Kernelement (10) ein durch eine einzelne Spule erregtes einzelnes Kernelement ist; und
- das Kernelement (10) und das Element (14) so angeordnet sind, dass eine dritte Relativposition (M) des Kernelements (10) und des Elements (14) existiert, wobei in dieser Position
- das Polgebiet des Kernelements (10) teilweise in dem ersten Magnetpolgebiet des Elements (14) und teilweise in dem zweiten Magnetpolgebiet des Elements (14) so angeordnet ist, dass die dritte Relativposition dadurch stabilisiert ist, dass der Magnetfluss des Permanentmagneten (16) über das Kernelement geschlossen ist.

2. Solenoidventil nach Anspruch 1, **dadurch gekennzeichnet, dass** es ferner enthält:
eine Ventilkammer (22), versehen mit einem Einlass (24) und einer Vielzahl von Auslässen (26); und
ein Ventilelement (28, 30), das beweglich in der Ventilkammer (22) angeordnet ist, für ein selektives Koppeln des Einlasses (24) mit zumindest einem der Auslässe (26); und
eine Vorrichtung (28) zum Betätigen des Ventilelements (28, 30) mittels der Relativbewegung des Kernelements (10) und des Elements (14).

3. Solenoidventil nach Anspruch 2, **dadurch gekennzeichnet, dass** das Element (14) ferner versehen ist mit einer Polerweiterung (34, 36) in Kontakt mit den Polen des Permanentmagnet (16), zum Erzielen einer optimierten Wechselwirkung zwischen dem Permanentmagneten (16) und dem Kernelement (10).

4. Solenoidventil nach einem der Ansprüche 1 bis 3, **dadurch gekennzeichnet, dass** das Element (14) ein Rotor ist.

5. Solenoidventil nach Anspruch 4, **dadurch gekennzeichnet, dass** das Kernelement (10) zwei separate Polstücke (10-1, 10-2) aufweist, die einander gegenüber liegen, zum Bilden eines Rotorraums hierzwischen zum Aufnehmen des Rotors.

6. Solenoidventil nach Anspruch 5, **dadurch gekennzeichnet, dass** die Polerweiterungen (34, 36) in Kontakt zu den Polen des Permanentmagneten (14) sich über den Permanentmagneten (16) entlang einer Radialrichtung des Rotors erstrecken.

7. Solenoidventil nach einem der Ansprüche 4 bis 6, **dadurch gekennzeichnet, dass** das Ventilelement eine Welle (28), angefügt an den Rotor (14), enthält, für eine Drehung mit dem Rotor, wobei die Welle sich in die Ventilkammer (22) erstreckt und ein Dichtelement (30) aufweist, zum Schließen zumindest eines der Auslässe der Ventilkammer (22) in Übereinstimmung mit der Position des Rotors.

8. Solenoidventil nach Anspruch 7, **dadurch gekennzeichnet, dass** das Dichtelement (30) und die Ventilkammer (22) so ausgebildet sind, dass die Bewegung des Rotors zwischen der ersten und der zweiten Grenzstoppposition begrenzt ist, mittels dem Dichtelement (30), das gegen jeweilige Auslässe (26) der Ventilkammer (26) anliegt, wobei das Dichtelement (30) somit die Stoppervorrichtung (18, 20) bildet.

9. Solenoidventil nach einem der Ansprüche 1 bis 3, **dadurch gekennzeichnet, dass** das Element (14) ein Gleitelement ist, ausgebildet zum Ausführen einer linearen Hin- und Herbewegung relativ zu dem Kernelement (10).

10. Solenodventil nach Anspruch 9, abhängig von Anspruch 3, **dadurch gekennzeichnet, dass**, die Polerweiterungen des Gleitelements (14) einen ersten U-förmigen Teil (39) und einen zweiten U-förmigen Teil (40), aufgenommen in dem ersten U-förmigen Teil, enthalten, wobei die U-förmigen Teile in Kontakt zu jeweiligen Polflächen des Permanentmagneten (16) angeordnet sind.

11. Solenoidventil nach Anspruch 10, **dadurch gekennzeichnet, dass** das Kernelement (10) ein U-förmiges Joch zum Tragen der Spule (12) enthält, wobei die Enden des U-förmigen Joches den Enden der U-förmigen Polerweiterungen des Elements gegenüberliegen.

12. Solenoidventil nach einem der Ansprüche 1 bis 11, **dadurch gekennzeichnet, dass** der Permanentmagnet (16) aus Metallkeramikferrit gebildet ist.

13. Solenoidventil nach einem der Ansprüche 1 bis 11, **dadurch gekennzeichnet, dass** das Element (16) aus Polyoxy-Methilen (POM) gebildet ist.

14. Solenidventil nach einem der Ansprüche 1 bis 11, **dadurch gekennzeichnet, dass** das Element (16) aus Polyaryletherketon (PEKEKK) gebildet ist.

15. Verfahren zum Betreiben eines Solenoidventils nach einem der vorangehenden Ansprüche, enthaltend die Schritte:
a) Bewegen des Elements (14) relativ zu dem einzelnen Kernelement (10) in eine erste Grenzstoppposition (L) durch Zuführen eines Strompulses mit einer ersten Polarität zu der einzelnen Spule (12);
b) Bewegen des Elements (14) relativ zu dem einzelnen Kernelement (10) in die zweite Grenzstoppposition (R) durch Zuführen eines Strompulses mit einer Polarität entgegengesetzt zu der ersten Polarität zu der einzelnen Spule (12); und
c) Bewegen des Elements relativ zu dem einzelnen Kernelement (10) in die dritte Position zwischen der ersten und der zweiten Grenzstoppposition durch Zuführen einer Folge von Impulsen mit abwechselnder Polarität und kalibriertem Umfang an Energie zu der einzelnen Spule (12).

16. Verfahren zum Betreiben eines Solenoidventils nach Anspruch 15, **dadurch gekennzeichnet, dass** die Zuführung einer Folge von Impulsen mit abwechselnder Polarität und kalibriertem Umfang an Energie über einen PTC-Thermistor erzielt wird.

## Revendications

1. Vanne à solénoïde, comprenant :
un organe de noyau (10) pourvu d'une bobine (12) pour magnétiser ledit organe de noyau (10) ; et
un organe (14) comprenant au moins un aimant permanent (16) pour définir une première et une seconde régions polaires magnétiques dudit organe (14) ;
ledit organe (14) et ledit organe de noyau (10) étant disposés de sorte qu'un mouvement relatif soit possible entre ledit organe (14) et ledit organe de noyau (10) ;
des moyens d'arrêt (18, 20) pour limiter le mouvement relatif dudit organe de noyau (10) et dudit organe entre une première et une seconde positions limites d'arrêt ;
lesdits moyens d'arrêt (18, 20) étant disposés de sorte que
- dans ladite première position limite (L) d'arrêt une région polaire dudit organe de noyau (10) est placée dans la première région polaire magnétique dudit organe et ledit organe est sollicité par le flux magnétique dudit aimant permanent (16) vers ledit moyen d'arrêt (18) pour conserver ladite première position limite d'arrêt, et
- dans ladite seconde position limite d'arrêt (R) ladite région polaire dudit organe de noyau (10) est placée dans ladite région du second pôle magnétique dudit organe (14) et ledit organe est sollicité par le flux magnétique dudit aimant permanent (16) vers ledit moyen d'arrêt (20) pour conserver ladite seconde position d'arrêt ;
**caractérisé en ce que**
- ledit organe de noyau (10) est un organe de noyau unique excité par une bobine unique ; et
- ledit organe de noyau (10) et ledit organe (14) sont disposés de sorte qu'il existe une troisième position relative (M) dudit organe de noyau (10) et dudit organe (14), position dans laquelle
- ladite région polaire dudit organe de noyau (10) est placée partiellement dans ladite première région polaire magnétique dudit organe (14) et partiellement dans ladite seconde région polaire magnétique dudit organe (14), de sorte que ladite troisième position relative soit stabilisée du fait de la fermeture, par l'organe de noyau, du flux magnétique dudit aimant permanent (16).

2. Vanne à solénoïde selon la revendication 1, **caractérisée en ce qu'**elle comprend en plus :
une chambre (22) de vanne pourvue d'une admission (24) et d'une pluralité de sorties (26) ; et
un organe de vanne (28, 30) placé mobile dans ladite chambre (22) de vanne, pour connecter sélectivement ladite admission (24) à au moins l'une desdites sorties (26) ; et
des moyens (28) pour actionner ledit organe de vanne (28, 30) au moyen dudit mouvement relatif entre ledit organe de noyau (10) et ledit organe (14).

3. Vanne à solénoïde selon la revendication 2, **caractérisée en ce que** l'organe (14) est de plus pourvu d'extensions polaires (34, 36) en contact avec les pôles dudit aimant permanent (16), pour obtenir une interaction optimisée entre l'aimant permanent et l'organe de noyau (10).

4. Vanne à solénoïde selon l'une des revendications 1 à 3, **caractérisée en ce que** l'organe (14) est un rotor.

5. Vanne à solénoïde selon la revendication 4, **caractérisée en ce que** ledit organe de noyau (10) comporte deux pièces polaires séparées (10-1, 10-2) se faisant mutuellement face pour former entre elles un logement de rotor pour recevoir le rotor.

6. Vanne à solénoïde selon la revendication 5, **caractérisée en ce que** lesdites extensions polaires (34, 36) en contact avec lesdits pôles dudit aimant permanent (16) s'étendent au-delà de l'aimant permanent (16) selon une direction radiale du rotor.

7. Vanne à solénoïde selon l'une des revendications 4 à 6, **caractérisée en ce que** ledit élément de vanne inclut un axe (28) attaché au rotor (14) pour tourner avec le rotor, ledit axe se prolongeant dans la chambre de vanne (22), et comportant un élément d'étanchement (30) pour obturer au moins l'une desdites sorties de ladite chambre (22) de vanne selon la position dudit rotor.

8. Vanne à solénoïde selon la revendication 7, **caractérisée en ce que** ledit élément d'étanchement (30) et ladite chambre (22) de vanne sont agencés en sorte que le mouvement dudit rotor soit limité entre ladite première et ladite seconde positions limites d'arrêt, par l'action dudit élément d'étanchement (30) butant contre les sorties (26) respectives de ladite chambre (22) de vanne, ledit élément d'étanchement (30) constituant donc ledit moyen d'arrêt (18, 20).

9. Vanne à solénoïde selon l'une des revendications 1 à 3, **caractérisée en ce que** ledit organe (14) est un élément coulissant adapté pour se déplacer selon un mouvement linéaire alternatif par rapport audit organe de noyau (10).

10. Vanne à solénoïde selon la revendication 9 dépendante de la revendication 3, **caractérisée en ce que** lesdites extensions polaires dudit élément coulissant (14) comprennent une première partie en forme de U (38) et une seconde partie en forme de U (40) placée dans ladite première partie en forme de U, lesdites parties en forme de U étant placées en contact avec les faces polaires respectives dudit aimant permanent (16).

11. Vanne à solénoïde selon la revendication 10, **caractérisée en ce que** ledit organe de noyau (10) comprend une culasse en forme de U portant le bobinage (12), les extrémités de ladite culasse en forme de U faisant face aux extrémités desdites extensions polaires en forme de U dudit organe.

12. Vanne à solénoïde selon l'une des revendications 1 à 11, **caractérisée en ce que** l'aimant permanent (16) est réalisé en ferrite de métal et de céramique.

13. Vanne à solénoïde selon l'une des revendications 1 à 11, **caractérisée en ce que** l'élément (16) est réalisé en poly-oxy-méthylène (POM).

14. Vanne à solénoïde selon l'une des revendications 1 à 11, **caractérisée en ce que** l'élément (16) est réalisé en polyaryléthercétone (PEKEKK).

15. Procédé d'utilisation d'une vanne à solénoïde selon l'une quelconque des revendications précédentes, comprenant les étapes consistant à :
a) déplacer l'organe (14) par rapport à l'élément à noyau unique (10) jusqu'à ladite première position limite d'arrêt (L) par fourniture d'une impulsion de courant d'une première polarité la bobine unique (12) ;
b) déplacer l'organe (14) par rapport à l'élément à noyau unique (10) jusqu'à ladite seconde position limite d'arrêt (R) au moyen de la fourniture, à ladite bobine unique (12), d'une impulsion de courant d'une polarité opposée à ladite première polarité) ; et
c) déplacer l'organe (14), par rapport audit organe de noyau unique (10), jusqu'à ladite troisième position entre ladite première et ladite seconde positions limites d'arrêt, par fourniture, à ladite bobine unique (12), d'une suite d'impulsions ayant des polarités alternées et une quantité d'énergie calibrée.

16. Procédé d'utilisation d'une vanne à solénoïde selon la revendication 15, **caractérisée en ce que** la fourniture d'une suite d'impulsions ayant des polarités alternées et une quantité d'énergie calibrée est obtenue par un thermistor PTC.
